Europäisches Patentamt

European Patent Office

Office européen des brevets

(11) Veröffentlichungsnummer: **0 388 849**
**A2**

## (12) EUROPÄISCHE PATENTANMELDUNG

(21) Anmeldenummer: **90105132.6**

(22) Anmeldetag: **19.03.90**

(51) Int. Cl.⁵: **B01D 29/46**

Die Bezeichnung der Erfindung wurde geändert (Richtlinien für die Prüfung im EPA, A-III, 7.3).

(30) Priorität: **24.03.89 DE 3909810**

(43) Veröffentlichungstag der Anmeldung:
**26.09.90 Patentblatt 90/39**

(84) Benannte Vertragsstaaten:
**AT BE CH DE DK ES FR GB GR IT LI LU NL SE**

(71) Anmelder: **Lajos, Simon**
**Tancsics m. ut. 26**
**HU-2457 Adony(HU)**

Anmelder: **Laszlo, Simon**
**Zalka m. ut. 6**
**Sarbogard(HU)**

(72) Erfinder: **Lajos, Simon**
**Tancsics m. ut. 26**
**HU-2457 Adony(HU)**
Erfinder: **Laszlo, Simon**
**Zalka m. ut. 6**
**Sarbogard(HU)**

(74) Vertreter: **Petra, Elke, Dipl.-Ing. et al**
**Tattenbachstrasse 9**
**D-8000 München 22(DE)**

(54) Spaltfilter für Flüssigkeiten.

(57) Es wird ein Filter für zylindrische oder ebene Filteranlagen zur mechanischen Reinigung von Flüssigkeiten beschrieben, der zusammengesetzt ist aus mehreren übereinanderstehend angeordneten Filterelementen (4), die zwischen sich jeweils schlitzförmige Filteröffnungen freilassen und über durch sie hindurchgeführte Stäbe und Endflansche zusammengehalten ausgebildet sind. Die Durchlaßöffnungen für die Stäbe sind als Buchsen (7) ausgebildet, denen Abstandshalter (8) zugeordnet sind. Die Filterelemente weisen einen Trapezquerschnitt (6) auf, dessen äußere, längere Grundseite (16a) zusammen mit einer Filteröffnungshöhe die Höhe der Buchse (7) ergeben.

FIG.1

EP 0 388 849 A2

Die Erfindung bezieht sich auf Filter für zylindrische oder ebene Filteranlagen für die Filtrierung von Flüssigkeiten, die mit festen Mikro- oder Makro-Partikeln verunreinigt sind, gemäß Oberbegriff des Anspruchs 1.

Es sind Filter zur mechanischen Reinigung von Flüssigkeiten in unterschiedlichster Bauweise bekannt.

So ist eine Filteranordnung mit Drehfiltertrommel in der DE-PS 19 15 561 beschrieben, die zur Konzentration von Fasersuspensionen benutzt wird. Bei diesem Filter sind zwischen zwei Endwänden Stäbe parallel zu der Mittelachse angeordnet, wodurch ein zylindrischer Korb gebildet wird, der mit einer Filtermantelhülle umgeben ist. Diese Ausführung ist sehr kompliziert und die Zuverlässigkeit der Filteranlage und die Qualität der Konstruktion sind nicht befriedigend.

Eine besondere Filterkonstruktion ist in der DE-OS 25 12 781 aufgezeigt. Das Trägergestell dieser Filteranlage besteht aus Trägerstäben und aus Längsstäben aus spiralartig gewickeltem Draht. An dem so gebildeten Trägergestell ist das eigentliche Filtergewebe angeordnet. Damit ist ein traditioneller Filter vorgesehen, bei dem der spiralartige Wickeldraht und die Trägerstäbe keine Rolle in der Filtration spielen, sondern diese dienen nur der Stabilität des Gewebefilters.

Eine weitere Filterkonstruktion ist aus der DE-OS 22 41 063 bekannt, bei der zwei Drähte spiralartig parallel miteinander an einem perforierten Trägerstab aufgewickelt sind. Einer der Drähte ist polygonal, der andere rund oder viereckig ausgebildet. Die Einströmung der Flüssigkeit erfolgt durch die Öffnungen zwischen den runden oder viereckigen Drähten, oder durch die Öffnungen der vieleckigen Drähte. Im Falle der vieleckigen Ausgestaltung haben die Filteröffnungen veränderliche Abmessungen und deshalb können oft Kolmationen (Fest setzungen) und irgendwelche Havarien entstehen. Ihre Reinigung ist ziemlich umständlich, da diese nur mit Hilfe der sogenannten Gegenströmungs-Methode realisierbar ist. Die Ursache dafür ist, daß die Filteröffnungen der vieleckigen Drähte nach innen entweder zu- oder abnehmend ausgebildet sind.

Aufgabe der Erfindung ist es, einen Filter oben genannter Gattung anzugeben, der einfach und stabil im Aufbau und vielseitig in der Anwendung ist und bei dem neben einer optimalen Filtration eine leichte Reinigung und Instandsetzung möglich ist.

Diese Aufgabe wird durch einen Filter mit den kennzeichnenden Merkmalen des Anspruchs 1 gelöst. Vorteilhafte Weiterbildungen sind in den Unteransprüchen enthalten.

Das Prinzip der Erfindung beruht auf der Erkenntnis, daß mit übereinander angeordneten und befestigten einzelnen Filterelementen die kontinuierlich, stetig und ständig sich nach innen erweiternde Öffnungen in beliebiger bzw. notwendiger Größe aufweisen, nur ein minimaler Druckverlust vorhanden ist.

Dazu kommt noch die Vergrößerung der Filterfläche, die mit polygonalen Öffnungen ausgestattet ist, wodurch eine größere Einströmungsoberfläche erreicht wird. Daraus folgt, daß die Durchlässigkeit der Eintrittsflächen mehrfach erhöht werden kann.

Die Erfindung hat auch die Konsequenz, daß mit der Ausgestaltung der nach innen erweiterten Filteröffnungen die feinkörnigen Stoffe separiert werden können, die wegen dem äußeren Öffnungs-Engpaß behindert wären. Daraus folgt, daß die Reinigung des Filterelements infolge des Venturi-Effekts wegen der nach innen erweiterten Öffnungen stattfindet, weil dadurch die Bewegungsenergie der Flüssigkeit beim Durchtritt erhöht wird und sich so die Eliminierung der Ablagerungen durch größere Geschwindigkeiten vollzieht.

Vorteilhaft ist erfindungsgemäß auch, daß zylindrische oder ebene Filter für die Filtration der Flüssigkeiten, die mit festen Mikro- oder Makro-Teilen verunreinigt sind, herstellbar sind. Die Filter enthalten übereinander gelegte, ringförmige Elemente oder Segmente oder gerade Elemente, die über entsprechende runde Verbindungsstäbe mit jeweils äußeren Anschlußflanschen zusammengehalten werden können, wobei die Filteröffnungen zwischen den Filterelementen gebildet sind. Die Filterelemente können dabei einstückig oder aus Teileinheiten bzw. Segmenten zusammengesetzt sein. Alle Elemente bzw. deren Grundkörper weisen einen Trapezquerschnitt mit zueinander parallelen Grundseiten auf, wobei die große Grundseite die Flüssigkeits-Eintrittseite ist. Aus einer der beiden schrägen Seitenflächen ragen mehrere Buchsen in gleicher Beabstandung zueinander heraus. Zudem sind zwischen den Buchsen mehrere tropfen- oder keilförmige Abstandshalter angeordnet. In der andern der beiden schrägen Seitenflächen sind Vertiefungen vorgesehen, in welche die Buchsen und die Abstandshalter, beispielsweise des darunter liegenden Elements hineinreichen. Des weiteren sind die runden Verbindungs- und Versteifungsstäbe durch die Buchsen der Filterelemente geführt, die endseitig durch Schrauben/Muttern oder durch Schweißen am jeweiligen End- bzw. Anschlußflansch befestigt sind.

Die erfindungsgemäßen Filter können gemäß einer weiteren Ausgestaltung des Erfindungsgedankens so ausgebildet sein, daß an beiden Seitenflächen des Trapezquerschnittes der Filterelemente jeweils eine Reihe polygonaler Zähne in gleicher Anordnung vorgesehen sind. Die Zähne sind dabei mit der Mantel-Kante der längeren Trapezgrundseite parallel und senkrecht angeordnet, wobei die Zahnkopf-Oberfläche gleichlaufend mit der schrägen Trapezseitenfläche, immer einen eingeengten Durchtrittsquerschnitt sicherstellen.

Die beiden gegenläufigen Zahnreihen sind jeweils versetzt zueinander angeordnet, so daß beispielsweise einem Zahnzwischenraum der oberen Zahnreihe ein Zahn der unteren Zahnreihe entspricht. Hierdurch werden beim Aufeinanderliegen der Filter elemente die Zähne praktisch genau formschlüssig ineinander greifen und je nach Auslegung der Zahnbreite und Zahnhöhe Filteröffnungen zwischen Zahnkopf und oberer Kante des Trapezquerschnittes und zudem senkrechte Spalte zwischen den einzelnen Zähnen bilden. Insbesondere für die senkrechten Schlitze ist von Vorteil, wenn die Zähne sich in das Filterinnere, also zur Austrittseite hin verringern, sodaß beispielsweise ein keilförmiger horizontaler Zahnquerschnitt vorhanden ist.

Die Ausbildung der Filterelemente mit auf ihrer Ober- und Unterseite alternierend angeordneten Zähnen kann des weiteren so vorgenommen werden, daß die Zähne nicht mit dem durch die große Grundseite gebildeten Mantelfläche abschließen, sondern über diese hinausragen. So kann beispielsweise der Zahnrücken auf der Eintrittsseite der Elemente jeweils spitz bzw. dreieck- oder dachartig zulaufend ausgebildet sein, so daß von außen betrachtet ein Filterelement, insbesondere in zusammengebautem Zustand, wie ein mit V-förmigen Rinnen versehener Zylinder anmutet, bzw. die Oberfläche ist im wesentlichen zick-zack-förmig gestaltet. Dabei sind die Zähne auch in Austrittsrichtung erneut sich verjüngend ausgebildet und auch der Zahnkopf weist eine Einwärtsschrägung auf, sodaß insgesamt die Durchtrittsöffnungen sich auf der Eintrittsseite bis zu diesen verringern und auf der Austrittsseite in ähnlicher Weise wieder erweitern, die genannten Vorteile realisierend.

Bei der Ausgestaltung der einzelnen Filterelemente zusammengesetzt aus mehreren geraden oder ringsegmentartigen Teileinheiten ist in der Mitte jeweils eine mit einer Stecknut versehene Buchse, flankiert von Abstandhaltern, vorgesehen. An den Enden der mehreren Teileinheiten der Filterelemente befindet sich jeweils eine Halb-Buchse mit in die Stecknut des darüber oder darunter liegenden Elements passenden Steckring bzw. Steckflansch. Beim Aufbau eines Filters werden die Teileinheiten der Filterelemente zuerst zu mehreren nebeneinander zu einem Filterelement so zusammengesetzt, daß die jeweiligen Halb-Buchsen sich zu einer Vollbuchse vervollstän digen. Das darüber liegende Filterelement wird danach aus den Teileinheiten so zusammengesetzt, daß diese ziegelartig versetzt übereinander zu liegen kommen.

Von Vorteil ist, wenn die Buchsen und Abstandshalter die gleiche Höhe aufweisen, wie die Filterelemente bzw. deren große Trapezgrundseite plus Höhe der Filteröffnungen. Durch einfaches genaues Übereinandersetzen der Filterelemente werden dadurch gleichmäßig große Filteröffnungen erhalten.

Der erfindungsgemäße Filter weist viele Vorteile auf, insbesondere wegen seiner vielseitigen nutzung und Anwendung. Er kann eingesetzt werden für die mechanische Reinigung aller Flüssigkeiten jedwelcher Form und Größe. So kann der Filter sehr erfolgreich als Brunnenfilter Verwendung finden. Außerdem kann er als Element für Wasserkläranlagen mit großen Durchmessern eingesetzt werden, bei denen die Oberfläche zylindrisch oder eben ist. Seine außerordentlich vorteilhafte Einsetzbarkeit ist durch die Filterelemente gegeben, die als Einzelfertigelemente oder als zusammenbaubare Teileinheiten bereitstellbar sind.

So können erfindungsgemäß großkalibrige, zylindrische oder ebene Filteranlagen aus Teilelementen, die ziegelartig zu Filterelementen in beliebigen Dimensionen und Formen zusammengebaut werden können, eingesetzt werden. Die Zusammenstellung der Filterelemente ist schnell und unkompliziert durchführbar. Die Ausgestaltung ist insgesamt wirtschaftlich und von zuverlässiger Qualität, so daß nur minimale Instandhaltungsmaßnahmen notwendig sind, um die Reinigung der Flüssigkeiten mit gleichförmigen Öffnungsabmessungen und damit gleichförmiger Reinigungsqualität vornehmen zu können.

Die Erfindung wird nachfolgend anhand mehrerer Ausführungsbeispiele unter Bezug auf die Zeichnung näher beschrieben.

Es zeigt:

Fig. 1 eine Perspektivansicht eines Filterelements eines zylindrischen Filters,

Fig. 2 eine Perspektivansicht eines Segments eines ringförmigen, großkalibrigen zylindrischen Filterelements,

Fig.3 eine Perspektivansicht einer geraden Teileinheit eines Filterelements eines ebenen Filters,

Fig.4a, 4b einen zylindrischen Filter in Seitenansicht und in Draufsicht, in einer ersten, einfachen Ausführung,

Fig. 5a, 5b einen zylindrischen Filter in Seitenansicht und in Draufsicht, in zweiter Ausführung, als großkalibriger zylindrischer Filter,

Fig. 6a, 6b einen ebenen Filter in Seitenansicht und in Draufsicht,

Fig. 7a, 7b einen ebenen Filter in zwei Ansichten, in der Ausgestaltung als großflächiger Filter,

Fig. 8 eine Perspektivansicht eines zweiseitig mit Abstandszähnen versehenen Filterelements,

Fig. 9 eine Ansicht eines aus mehreren Filterelementen und Anschlußflanschen zusammengesetzten Filterrohres, in teilweisem Schnitt, und

Fig. 10 eine Perspektivansicht eines weiteren

Ausführungsbeispieles eines ringförmigen Filterements mit zweiseitig angeordneten Abstandszähnen, mit dachförmigen äußeren Zahnrücken.

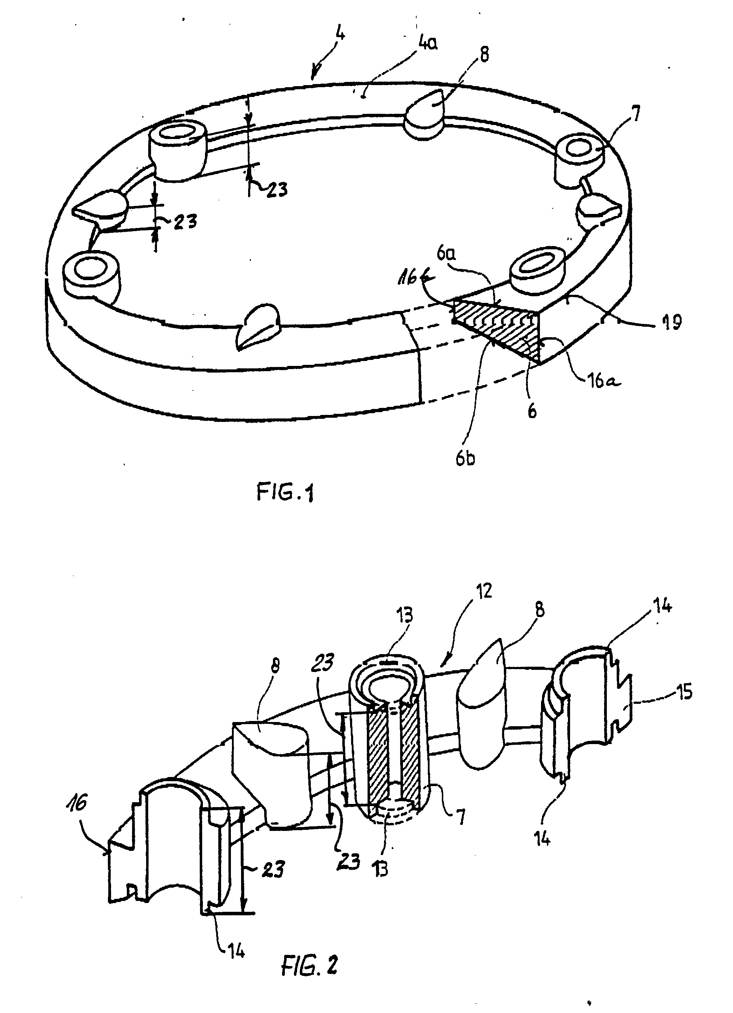

Der wesentliche Aufbau der zylindrischen (1) oder ebenen (2) Flüssigkeitsfilter, unter Verwendung einteiliger Filterelemente (4, 5, 18) sind in den Figuren 1, 4a, 4b, 6a, 6b und 8 dargestellt.

Fig.1 zeigt pespektivisch ein aus einem Stück geformtes, also ein einteiliges Filterelement eines zylindrischen Filters, der einen Trapezquerschnitt (6) mit parallelem Grundseiten (16a, 16b) aufweist. Aus einer, vorzugsweise der oberen der Schrägseiten (6a), ragen in gleichen Abständen, jedoch sich abwechselnd, mehrere hohlzylinderähnliche Buchsen (7) und tropfen- oder keilförmige Abstandshalter heraus. In der andern der beiden schrägen Seitenflächen (6b) sind den Buchsen (7) und Abstandshaltern (8) entsprechende Vertiefungen vorgesehen, sodaß beim Übereinanderlegen der Elemente die Buchsen bzw. Abstandshalter in diese Vertiefungen hineinstehen. Dabei weist die längere, parallele Grundseite (16a) des Trapezquerschnittes (6) zusammen mit der lichten Höhe (22) einer Filteröffnung (3) die gleiche Höhenabmessung auf, wie die Buchsen (7) bzw. die Abstandshalter (8).

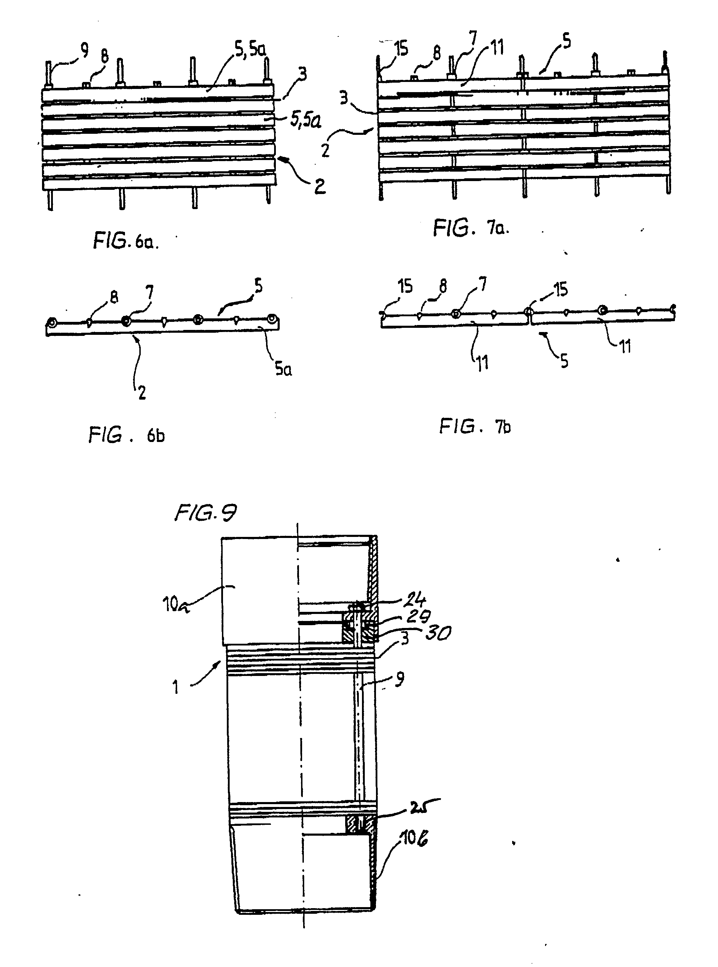

Fig.6a und 6b zeigen die Ausgestaltung eines ebenen Filters (2), bei dem die übereinandergelegten einteiligen geraden Filterelemente (5) über durch die Buchsen (7) der Filterelemente hindurchgeführte runde Verbindungsstäbe (9) festgehalten sind, während die Filteröffnungen (3) durch die Anordnung der Abstandshalter (8) ausgebildet sind.

Fig.2 zeigt ein ringförmiges Segment (12) eines Filterelements (4) des zylindrischen Filters (1). In der Mitte des kreisförmigen Filtersegments (12) befindet sich die Buchse (7), mit den benachbarten Abstandshaltern (8), während an den beiden äußeren Enden des Segments (12) Halb-Buchsen (15), also axial halbierte Buchsen, vorgesehen sind, die jeweils an ihren beiden Enden mit Steckflanschen (14) ausgestattet sind, die in entsprechende Stecknuten (13) der mittigen Buchse eines anderen Elements hineinpassen.

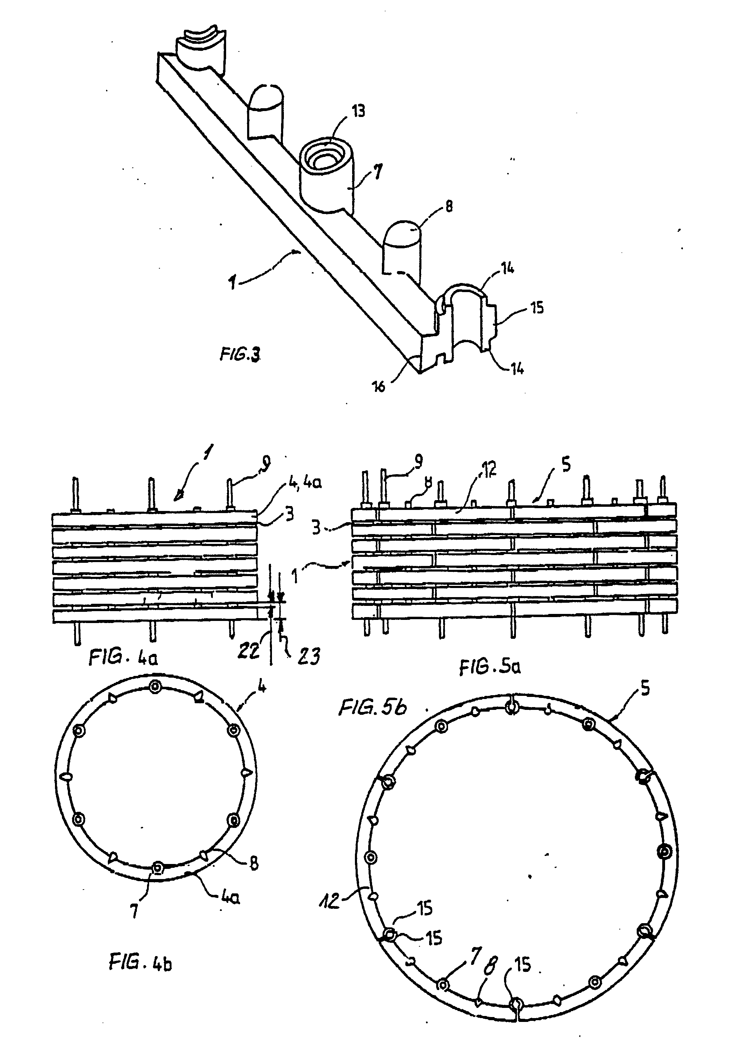

Fig.3 illustriert die Ausbildung einer geraden Teileinheit (11) eines zusammengesetzten Filterelements (5) des ebenen Filters (2), bei dem, ähnlich wie bei dem Ausführungsbeispiel nach Fig.2, an den Enden der Teileinheit (11) die beiden Halb-Buchsen (15) mit Steck- oder Anschlußflanschen (14) ausgebildet sind. In der Mitte des Teiles (11) befindet sich eine beidseitig mit Stecknuten ausgebildete Buchse (7) für die Aufnahme der Steckflansche (14), der von zwei Abstandshaltern (8) flankiert ist.

Die Fig.5a und 5b bzw. 7a und 7b zeigen jeweils eine aus Segmenten (12) bzw. Teileinheiten (11) bestehende und aus ringförmigen (4) oder geraden (5) Filterelementen gebaute zylindrische oder ebene Filterkonstruktion (1 bzw. 2).

Die Segmente oder Teileinheiten (12 oder 11) sind entlang der Halb-Buchsen (5) in gleicher Ebene zusammengepaßt, wonach die entsprechenden Teileinheiten des Segmente (11 oder 12) durch die mit Nut (13) ausgebildete mittlere Buchse (7) in ziegelartig übereinander gestelter Form zusammengeschlossen sind. Dadurch wird eine zylindrische (1) oder ebene (2) Filteranlage, bestehend aus Filterelementen, gebildet.

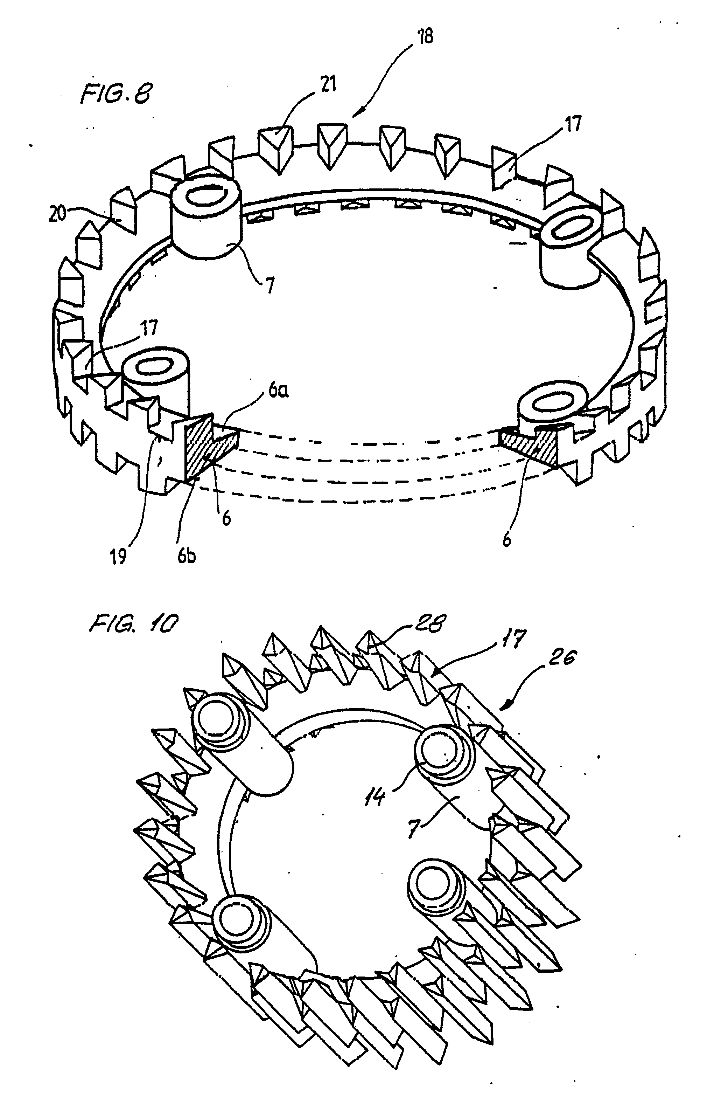

Der Filter (1, 2) besteht aus Filterelementen (4, 5, ), die Buchsen (7) und Abstandshalter (8) aufweisen. Durch die Buchsen (7) sind runde Verstärkungsstäbe (9) hindurchgeführt, die - wie Figur 9 zeigt - an Endflanschen (10) mit Hilfe von Muttern (24) oder durch Schraubverbindungen (25) oder Schweißen befestigt sind.

Zwischen oberem Endflansch (10a) und darunterliegender Filterelementereihe ist ein Druckstück (29) angeordnet, welches über die Stäbe (9) und Senkmuttern (30) die Filterelemente festhält, während der obere Endflansch (10a) auf den Stäben (9) aufgeschoben und über Muttern (24) an dem Druckstück (29) befestigt ist. Druckstück (29) und Endflansch (10a) können jedoch auch ein einziges Stück sein.

Dabei sind die Endflanschen (10a, 10b) so ausgestaltet, daß der eine Flansch ein Außengewinde aufweist, welches in das Innengewinde des zweiten Flansches einschraubbar ist. So können, je nach benötigter Filterlänge, mehrere Teilfilter (1) axial aufeinander gesetzt und zusammengeschraubt werden.

Die Endflansche können jedoch auch statt als Schraubflansche als Aufsteckflansche ausgebildet sein, wobei der aufsteckbare Flanschteil eine entsprechende Einrastausbuchtung und der einsteckbare Flanschteil einen Einrastwulst zur gegenseitigen Fixierung der Flanschen und damit der Filterteilelemente bilden. Die Verbindungen müssen jedenfalls so ausgestaltet sein, daß sie das Eigengewicht des aus mehreren Teilfiltern zusammengesetzten, beispielsweise zylindrischen Filters, zu halten vermögen.

Schließlich zeigt Fig.10 ein weiteres Ausführungsbeispiel eines ringförmigen Filterelements (26), bei dem, ähnlich wie bei dem Ausführungsbeispiel nach Fig.8, die beiden schrägen Seitenflächen (6a, 6b) der Ringelemente Zähne (17) aufweisen, die aus diesen in gleicher vertikaler Richtung wie die große Grundseite, herausragend angeordnet sind. Dabei weisen die Zähne jeweils einen prismen- bzw. dachförmigen Dreiecksrücken (27) auf, der aus der durch die große Grundseite des Trapezquerschnittes (6) gebildeten Mantelfläche herausragt. Zudem sind die Zähne abwechselnd in Vertikal- bzw. Achsrichtung so verschoben, daß jeder zweite Zahn über die obere kante (19) des Trapezquerschnittes herausragt, während der dazwischenliegende Zahn praktisch mit dieser Kante endet. Der Zahnfuß eines jeden zweiten Zahnes schließt folglich in Höhe der Kante (19) ab, während gleichzeitig die jeweiligen Zahnköpfe eine nach innen zur Ringmitte geneigte Innenschräge (28) in gleicher Neigungsrichtung wie die entsprechende Seitenfläche des Trapezquerschnittes aufweisen. Schließlich stehen die einzelnen Zähne (17) zusätzlich keilförmig auf der jeweiligen Schrägseite des Trapezquerschnittes (6) auf bzw. gleichzeitig in das Ringinnere hinein, wodurch ebenfalls die Durchflußgeschwindigkeit der zu filternden Flüssigkeit beeinflußt wird. Die Buchsen (7) sind dabei in ähnlicher Weise, wie in den Beispielen nach Figuren 2, 3 und 8, mit Zentrier- bzw. Steckflansch (14) und Stecknut (13) ausgestattet, durch welche die Filteröffnungshöhe (3) mitbestimmt wird.

## Bezugszeichenliste

1. zylindrischer Filter
2. ebener Filter
3. Filteröffnung
4., 4a. ringförmiges Filterelement
5. gerades Filterelement
6. Trapezquerschnitt
7. Buchse
8. Abstandshalter
9. runder Stab
10a,10b Endflanschen
11. gerades Teilelement
12. Segment-Teileinheit
13. Stecknut
14. Steckflansch
15. Halb-Buchse
16a. große Grundseite
16b. kurze Grundseite
17. polygonale Abstandszähne
18. Filterelement mit Abstandszähnen
19. äußere Kante der großen Trapezgrundseite
20. Zahnquerschnitt
21. obere Zahnfläche (Zahnkopf)
22. Höhe der Filteröffnung
23. Höhe der Abstandshalter bzw. Buchsen
24. Muttern
25. Schraub-/Schweißverbindung
26. Filterelement mit dachförmigem Zahnrücken
27. dachförmiger Zahnrücken
28. Rinnenschräge
29. Druckstück
30. Mutter

## Ansprüche

1. Filter für zylindrische oder ebene Filteranlagen zur mechanischen Reinigung von mit Mikro- oder Makropartikeln verunreinigten Flüssigkeiten, **dadurch gekennzeichnet,** daß er zumindest in seiner Höhen- bzw. Längenausdehnung zusammengesetzt ist aus mehreren übereinander stehend angeordneten Filterelementen (4, 5, 18, 26), die zwischen sich jeweils nach innen sich erweiternde, schlitzförmige Filteröffnungen (3) freilassen und über durch sie hindurchgeführte Verbindungs- bzw. Versteifungsstäbe (9) und End- bzw. Verbindungs-Flanschen (10a, 10b) zusammengehalten ausgebildet sind.

2. Filter nach Anspruch 1, dadurch gekennzeichnet, daß zur Ausbildung zylinderischer Filter, ringförmige Filterelemente (4, 18, 26) vorgesehen sind.

3. Filter nach Anspruch 1, dadurch gekennzeichnet, daß zur Ausbildung ebener Filter gerade Filterelemente (5) vorgesehen sind.

4. Filter nach Ansprüchen 1 bis 3, dadurch gekennzeichnet, daß die Filterelemente als einstükkige Einheiten (4a, 5a, 18, 26) ausgebildet sind.

5. Filter nach den Ansprüchen 1 bis 3, dadurch gekennzeichnet, daß die Filterelemente jeweils aus mehreren Ringsegmenten (12) oder Teileinheiten (11) zusammengesetzt sind.

6. Filter nach Anspruch 1, dadurch gekennzeichnet, daß die Filterelemente einen sich ins Filterinnere verjüngenden Trapezquerschnitt (6) mit parallelen Grundseiten (16a,16b) aufweisen, wobei die große Grundseite (16a) die äußere Mantelfläche bildet und vorzugsweise an der oberen Schrägseite (6a) mehrere Abstandshalter gleichmäßig im Verhältnis zu den Durchgangsöffnungen der Stäbe (9) verteilt angeordnet sind.

7. Filter nach den Ansprüchen 1 und 6, dadurch gekennzeichnet, daß die Durchgangsöffnungen für die Stäbe (9) die Bohrungsöffnungen von Buchsen (7) sind, die aus der oberen Schrägfläche (6a) des Trapezquerschnitts (6) herausragen und daß zwischen je zwei aufeinanderfolgenden Buchsen (7) mindestens ein Abstandshalter (8) in gleichförmiger Beabstandung angeordnet sind.

8. Filter nach Anspruch 7, dadurch gekennzeichnet, daß jeweils ein aus der oberen Schrägseite (6a) ragender Abstandshalter (8) zwischen zwei Buchsen (7) angeordnet ist, der eine tropfen- oder dreieckförmige Querschnittsform aufweist und daß seine abgerundete bzw. seine Breitseite ins Filterinnere hineinragend an der inneren Filterseite angeordnet ist und daß an der unteren Schrägseite (6b) den Buchsen und den Abstandshaltern (8) entsprechende Anlagevertiefungen vorgesehen sind und daß die Höhe der Buchsen (7) und der Abstandshalter (8) im wesentlichen gleich ist.

9. Filter nach den Ansprüchen 6 und 7, dadurch gekennzeichnet, daß als Abstandshalter an der oberen und an der unteren Schrägseite (6a, 6b) je eine Reihe von polygonalen Zähnen (17) vorgesehen sind, so daß Zähne und Zahnzwischenräume der oberen und der unteren Reihe einander abwechselnd angeordnet sind.

10. Filter nach Anspruch 9, dadurch gekennzeichnet, daß die Zähne (17) auf ihrer oberen Zahnfläche (21) eine ähnlich nach innen geneigte Schrägung aufweisen, wie die schrägen Seitenflächen (6a, 6b).

11. Filter nach den Ansprüchen 9 und 10, dadurch gekennzeichnet, daß die Zähne (17) einen dreieckigen bzw. keilförmigen Querschnitt aufweisen und derart auf den schrägen Seitenflächen (6a, 6b) angeordnet sind, daß sie mit ihrer breiten Rückenseite mit der Mantelfläche der großen Seite (16a) glatt abschließen, während sie sich gleichzeitig ins Filterinnere verjüngen.

12. Filter nach den Ansprüchen 9 und 10, dadurch gekennzeichnet, daß die Zähne (17) einen dach- bzw. keilförmigen Zahnrücken aufweisen, der aus der äußeren Mantelfläche des Trapezquerschnitts (6) zick-zack-förmig herausragen und daß der Zahngrund des jeweils aus der anderen Schrägsseite hervorragenden Zahnes (17) genau in der gleichen Ebene mit der Oberkante (19) des Trapezquerschnitts (6) endet.

13. Filter nach den Ansprüchen 8 und 9, dadurch gekennzeichnet, daß die Höhe der Buchsen (7) im wesentlichen gleich ist mit der Summe der Höhen der großen Grundseite (16) und einer Filteröffnung (3).

14. Filter nach Anspruch 5, dadurch gekennzeichnet, daß ein jedes Ringsegment (12) bzw. eine jede gerade Teileinheit (11) in der Mitte eine beidendig mit einer Steck-Nut (13) versehene Buchse (7) aufweist, der mindestens zwei Abstandshalter (8) symmetrisch zugeordnet sind und daß an den jeweiligen beiden Enden der Segmente bzw. Teileinheiten eine Halb-Buchse (15) mit beidendig angeordneten und mit den Nuten (13) korrespondierenden Steckflanschen (14) angeordnet sind.

15. Filter nach Anspruch 1, dadurch gekennzeichnet, daß die Endflanschen (10a, 10b) als ein Innengewinde (10a) bzw. ein Außengewinde (10b) aufweisende Zylinderflanschen mit zueinander korrespondierenden entsprechenden Gewinden ausgebildet sind.

16. Filter nach Anspruch 1, dadurch gekennzeichnet, daß die Endflanschen (10, 10b) als miteinander korrespondierende Steckflanschen mit Einrastnut und Einrastwulst oder dergleichen, ausgebildet sind.

FIG. 1

FIG. 2

FIG.3

FIG. 4a

FIG.5a

FIG. 4b

FIG.5b

FIG. 6a.

FIG. 6b

FIG. 7a.

FIG. 7b

FIG. 9

FIG.8

FIG. 10